# EUROPEAN PATENT APPLICATION

(11) **EP 4 723 137 A1**
(43) Date of publication of application: **08.04.2026**
(21) Application number: 24810211.3
(22) Date of filing: 08.05.2024
(51) Int. Cl.: H01B 1/02, H01B 13/00

(54) **MODIFIED ALUMINUM ALLOY CONDUCTOR AND PRODUCTION PROCESS THEREFOR, AND MODIFIED ALUMINUM ALLOY CONDUCTOR CABLE**

(30) Priority: 24.05.2023 CN 202310593286
(71) Applicant: Zhongtian Technology Submarine Cable Co., Ltd., Jiangsu 226000 (CN)
(72) Inventor: FENG, Yongsheng, Nantong, Jiangsu 226000 (CN); LU, Lin, Nantong, Jiangsu 226000 (CN); LU, Hongxia, Nantong, Jiangsu 226000 (CN); YU, Qiaoyu, Nantong, Jiangsu 226000 (CN); SUN, Jiasong, Nantong, Jiangsu 226000 (CN); ZHANG, Dongchu, Nantong, Jiangsu 226000 (CN)
(74) Representative: Boult Wade Tennant LLP
(86) International application number: PCT/CN2024/091789
(87) International publication number: WO 2024/239964

(57) **Abstract**

A modified aluminum alloy conductor and production process thereof, and a modified aluminum alloy cable. The modified aluminum alloy conductor includes 0.03-0.06 wt% of Si, 0.50-0.80 wt% of Fe, 0.20-0.30 wt% of Cu, 0.01 wt% or less of Mg, 0.02 wt% or less of Zn, 0.04 wt% or less of B, with a total content of unavoidable impurity being ≤0.08 wt% and a remainder being Al, by mass percentage. In the modified aluminum alloy conductor, the components of aluminum alloy is adjusted and the content of the components such as copper and iron is controlled reasonably, which maximizes the synergistic interaction between the components, and ensures that the aluminum alloy conductor exhibits excellent creep resistance, mechanical properties, flexibility, and electrical performance, thereby enhancing the reliability of cable connection, preventing phenomena such as slippage at connection points, guaranteeing the safe and reliable operation of the cable.

## Description

The present application claims the priority to Chinese Patent Application No. 202310593286.8, filed with the China National Intellectual Property Administration on May 24, 2023, and entitled with "MODIFIED ALUMINUM ALLOY CONDUCTOR AND PRODUCTION PROCESS THEREOF, AND MODIFIED ALUMINUM ALLOY CONDUCTOR CABLE", which is hereby incorporated by reference in its entirety.

### TECHNICAL FIELD

The present invention relates to a technical field of aluminum alloy processing, and specifically, to a modified aluminum alloy conductor and production process thereof, and a modified aluminum alloy conductor cable.

### BACKGROUND

Traditional aluminum cables suffer from disadvantages of low strength, susceptibility to creep, poor corrosion resistance, and a tendency to form a hard oxidation film on the surface that increases contact resistance, resulting in significant limitations in their applications. An aluminum alloy cable incorporates alloy elements into electrical aluminum and at the same time undergoes processes adjustment to significantly enhance the mechanical properties of the aluminum alloy conductor, thereby avoiding the issues of low elongation, poor creep resistance, and poor flexibility in pure aluminum conductors, which improves the reliability of cable connection.

In recent years, aluminum alloy cables have been widely used in photovoltaic power generation projects and offshore wind power projects. During cable laying and operation, some cables are in a water-immersed state, or even completely submerged in water. To ensure safe and reliable operation of cables, the demand for waterproof aluminum alloy cables will continue to increase. However, the aluminum conductor cables currently available on the market have the issue of poor creep resistance; and are highly susceptible to slippage and other phenomena at conductor connections as the service life of the cables increases, thereby causing safety hazards to electricity used in production and daily life.

### SUMMARY

The main objective of the present invention is to provide a modified aluminum alloy conductor and production process thereof, and a modified aluminum alloy conductor cable, thereby addressing the issue of safety hazards resulting from the poor creep resistance of aluminum alloy conductors in the existing technology.

To achieve the above objective, according to one aspect of the present invention, a modified aluminum alloy conductor is provided. The modified aluminum alloy conductor includes: 0.03-0.06 wt% of Si, 0.50-0.80 wt% of Fe, 0.20-0.30 wt% of Cu, 0.01 wt% or less of Mg, 0.02 wt% or less of Zn, 0.04 wt% or less of B, with a total content of unavoidable impurity being 0.08 wt% or less, and the remainder being Al, by mass percentage.

Further, a mass ratio of Fe to Si in the modified aluminum alloy conductor is 12-15:1.

Further, a mass ratio of Al to Cu in the modified aluminum alloy conductor is 350-490:1.

Further, the modified aluminum alloy conductor has a single-strand tensile strength ≥105 N/mm², a single-strand elongation at break ≥15%, and a single-strand repeated bending number ≥23 times.

Further, a creep resistance of the modified aluminum alloy conductor is ≥70%.

According to another aspect of the present invention, a production process for the modified aluminum alloy conductors is provided, sequentially comprising: a step of batching, a step of smelting and casting, a step of refining, a step of purifying, a step of casting blank, a step of rolling stem, and a step of annealing finished product, where the step of melting and casting includes: sequentially performing a primary filtration and a fine filtration on an aluminum alloy liquid to obtain a filtered aluminum alloy liquid, where a a process of the fine filtration is performed using electromagnetic purification.

Further, the aforementioned process of the fine filtration includes: passing a filtrate obtained from the primary filtration sequentially through a first-level magnetic field and a second-level magnetic field, where a magnetic field strength of the first-level magnetic field is less than that of the second-level magnetic field; preferably, the magnetic field strength of the first-level magnetic field is 0.3-0.5 T; preferably, the magnetic field strength of the second-level magnetic field is 0.6-0.8 T.

Further, the primary filtration is performed with a 30/50 PPI dual-stage ceramic filter plate; preferably, a removal rate of a non-metallic impurity particle ≥1µm in the filtered aluminum alloy liquid is ≥90%; preferably, an impurity content of the non-metallic impurity particle in the filtered aluminum alloy liquid is 0.010-0.022 mm²/kg.

Further, the temperature of the step of annealing finished product is controlled between 310°C and 340°C, and the duration of annealing finished product is preferably controlled between 8 h to 12 h.

According to another aspect of the present invention, a modified aluminum alloy conductor cable is provided, including a conductor, where the conductor is the modified aluminum alloy conductor described above.

By applying the technical solution of the present invention, the composition of aluminum alloy is adjusted, and the contents of copper, iron, and other elements are controlled appropriately, such that the synergistic interaction between various components is maximized, ensuring that the aluminum alloy conductor has excellent creep resistance, mechanical properties, flexibility, and electrical performance, thereby enhancing the reliability of cable connection, preventing phenomena such as slippage at conductor connections, and guaranteeing the safe and reliable operation of the cable.

### DESCRIPTION OF EMBODIMENTS

It should be noted that, without conflicting, the embodiments and features described therein in the present application may be combined with each other. The present invention will be described in detail below with reference to the embodiments.

As analyzed in the background of the present application, the poor creep resistance of aluminum alloy conductors in the prior art results in safety hazards, and to address this issue, the present application provides a modified aluminum alloy conductor and production process thereof, and a modified aluminum alloy cable.

In a typical embodiment of the present application, a modified aluminum alloy conductor is provided, where the modified aluminum alloy conductor includes: 0.03 to 0.06 wt% of Si, 0.50 to 0.80 wt% of Fe, 0.20 to 0.30 wt% of Cu, 0.01 wt% or less of Mg, 0.02 wt% or less of Zn, 0.04 wt% or less of B, with a total content of an unavoidable impurity being ≤0.08 wt%, and the remainder being Al, by mass percentage.

In the present application, the composition of the aluminum alloy is adjusted and the content of copper, iron, and other elements is controlled appropriately, such that the synergistic interaction between components is maximized, ensuring that the aluminum alloy conductor has excellent creep resistance, mechanical properties, flexibility, and electrical performance, thereby enhancing cable connection reliability, preventing phenomena such as slippage at conductor connections, and guaranteeing safe and reliable operation of the cable.

In one example of the present application, the mass ratio of Fe to Si in the modified aluminum alloy conductor is 12 to 15:1.

In general, Fe exists as an impurity element in aluminum alloys. In the presence of Si, it generally forms FeAl₃ phase, α(Al₁₂Fe₃Si₂) phase, β(Al₉Fe₂Si₂) phase, etc. These iron-rich phases exhibit high hardness, which is helpful to increase alloy strength and creep resistance but simultaneously reduces the plasticity of alloy, in which the α(Al₁₂Fe₃Si₂) phase is in regular block shape with less impact on alloy plasticity. By adjusting the Fe/Si ratio within the aforementioned range, the iron-rich phase is mainly precipitated as the α(Al₉Fe₂Si₂) phase, which facilitates an effective increase in the strength of the aluminum alloy while minimizing the adverse impact of Fe on the aluminum alloy plasticity.

In one example of the present application, the mass ratio of Al to Cu in the modified aluminum alloy conductor is 350 to 490:1.

The small amount of Cu added to the aluminum alloy reacts with aluminum to form a compound CuAl₂, which is blended into the solid solution and precipitated as metallic compound during heat treatment, thereby being conductive to increasing the electrical conductivity of the aluminum alloy. Further, in the present application, the mass ratio of Al to Cu is preferably controlled within the aforementioned range, which is more helpful to enhance the electrical conductivity and other properties of the modified aluminum alloy conductor.

In some examples of the present application, preferably, the modified aluminum alloy conductor has a single-strand tensile strength ≥105 N/mm², a single-strand elongation at break ≥15%, and a single-strand repeated bending number ≥23 times.

The above properties of the single strand of modified aluminum alloy conductor enable the corresponding modified aluminum alloy conductor to exhibit excellent mechanical property and flexibility.

In some examples of the present application, the creep resistance of the modified aluminum alloy conductor is preferably ≥70%, thereby further helping prevent phenomena such as slippage at conductor connections and ensuring the safe and reliable operation of the cable.

In another typical embodiment of the present application, a production process for modified aluminum alloy conductor is provided, sequentially including: a step of batching, a step of smelting and casting, a step of refining, a step of purifying, a step of casting blank, a step of rolling stem, and a step of annealing finished product, where the step of melting and casting includes: sequentially performing a primary filtration and a fine filtration on an aluminum alloy liquid to obtain a filtered aluminum alloy liquid, where a process of the fine filtration is performed using electromagnetic purification.

In the production process for modified aluminum alloy conductor, the aluminum alloy liquid is sequentially subjected to primary filtration and fine filtration, which facilitates thorough removal of the impurity from the metal melt of the aluminum alloy, thereby enhancing the electrical conductivity and fatigue resistance of the aluminum alloy.

In one example of the present application, the aforementioned process of fine filtration includes: passing a filtrate obtained from the primary filtration through a first-level magnetic field and a second-level magnetic field sequentially, where a magnetic field strength of the first-level magnetic field is less than that of the second-level magnetic field; preferably, the magnetic field strength of the first-level magnetic field is 0.3 to 0.5 T; preferably, the magnetic field strength of the second-level magnetic field is 0.6 to 0.8 T.

The sequential action of the first-level magnetic field in the weak zone and the second-level magnetic field in the strong zone effectively enhances the separation effect of non-metallic impurity particles from metallic particles. On the whole, the removal efficiency reaches 98% or more for particles above 10µm, thereby greatly eliminating non-metallic slag inclusions within the aluminum alloy, promoting melt purification, and improving its electrical conductivity.

In one example of the present application, the aforementioned primary filtration is performed with a 30/50 PPI dual-stage ceramic filter plate; preferably, a removal rate of non-metallic impurity particles ≥1µm in the filtered aluminum alloy liquid is ≥90%; preferably, an impurity content of the non-metallic impurity particles in the filtered aluminum alloy liquid is 0.010 to 0.022 mm²/kg.

The above primary filtration is conductive to removing non-metallic impurity particles with a particle size ≥10µm; preferably, the removal rate and inclusion content of non-metallic impurity particles in the filtered aluminum alloy liquid are beneficial for significantly enhancing the fatigue resistance of aluminum alloy material. Where, all components in the aluminum alloy liquid other than Al, Si, Fe, Cu, Mg, Zn, and B elements are impurities.

A reasonable annealing process for finished product helps improve the microstructure of the aluminum alloy, reduce its internal stress, and increase its mechanical properties and electrical conductivity. Further, it is preferred to control the temperature of the aforementioned step of annealing finished product to be between 310°C and 340°C, and the duration of annealing finished product is preferably controlled between 8 h to 12 h, optimizing the comprehensive properties of the modified aluminum alloy conductor. Compared to the finished product before annealing, the single-strand tensile strength of the conductor of the finished product after annealing decreases by 15-20%, its elongation at break increases by 400-600%, and its resistivity decreases by 10-15%.

In another typical embodiment of the present application, a modified aluminum alloy conductor cable including a conductor is provided, where the conductor is the aforementioned modified aluminum alloy conductor.

The aforementioned modified aluminum alloy conductor has excellent creep resistance, mechanical properties, flexibility, and electrical performance, such that the cable including the modified aluminum alloy conductor has high connection reliability, preventing the phenomenon such as slippage at conductor connections and ensuring safe and reliable operation of cables.

Additionally, the cable of the present application employs a structure with longitudinally-wrapped aluminum-plastic composite tape plus extruded waterproof PE sheath as the radial waterproof layer of the cable. After a cable sample is immersed in water for 120 hours, the composite layer outside the insulation layer is removed and it is observed with the naked eye that the outer surface of the insulation layer is dry. This prevents the occurrence of water treeing in cables directly laid in water during applications of electrical engineering, ultimately avoiding cable breakdown, extending the service life of cable, and enhancing economic efficiency.

The beneficial effects of the present application will be further illustrated below with reference to the examples.

### Example 1

**Table 1**

| Si | Fe | Cu | Mg | Zn | B | Total content of unavoidable impurity | Al |
|---|---|---|---|---|---|---|---|
| 0.05% | 0.6% | 0.25% | 0.01% | 0.02% | 0.04% | 0.08% | 98.95% |

After weighing and batching according to the composition table of Table 1, the modified aluminum alloy conductor is obtained sequentially through a step of batching, a step of smelting and purifying, a step of continuous casting and rolling, and a step of annealing finished product, finished product slitting, finished product detection, and finished product packaging, where the mass ratio of Fe to Si is 12:1, and the mass ratio of Al to Cu is 395.8:1.

During the step of melting and purifying, the aluminum alloy liquid is subjected to primary filtration using a 30/50 PPI dual-stage ceramic filter plate to obtain a filtrate; the filtrate is subjected to fine filtration by sequentially passing through an alternating electromagnetic field-type electromagnetic purification device. Specifically, the process of fine filtration includes: passing the filtrate through a first-level magnetic field with a magnetic field strength of 0.4 T and a second-level magnetic field with a magnetic field strength of 0.7 T in sequence, obtaining the filtered aluminum alloy liquid.

During the process of continuous casting and rolling: the melting temperature is 780°C, the casting temperature is 720°C, the speed of crystallization wheel during casting is 0.2-0.4 m/s, and the water pressure of cooling water is 0.03 MPa; the inlet temperature when the casting blank enters the continuous rolling mill is 500-520°C, the temperature of cooling emulsion is 50°C and a usage amount of the cooling emulsion is 1 m³/min, the final temperature of the rolled wire blank is 480°C or more, the temperature of on-line quenching is 460°C, and a rolling speed is 5.0-6.0 m/s.

The step for annealing finished product is performed at a temperature of about 320°C for 10 hours. The modified aluminum alloy conductor is finally obtained after the finished product slitting, the finished product detection, and the finished product packaging.

### Example 2

The difference of this example from Example 1 is as follows:

**Table 2**

| Si | Fe | Cu | Mg | Zn | B | Total content of unavoidable impurity | Al |
|---|---|---|---|---|---|---|---|
| 0.04% | 0.6% | 0.25% | 0.01% | 0.02% | 0.04% | 0.08% | 98.96% |

According to Table 2, the modified aluminum alloy conductor is obtained sequentially through a step of batching, a step of smelting and casting, a step of refining, a step of purifying, a step of casting blank, a step of rolling stem, a step of annealing finished product, the finished product slitting, the finished product detection, and the finished product packaging, where the mass ratio of Fe to Si is 15:1, and the mass ratio of Al to Cu is 395.84:1.

### Example 3

The difference of this example from Example 1 is as follows:

**Table 3**

| Si | Fe | Cu | Mg | Zn | B | Total content of unavoidable impurity | Al |
|---|---|---|---|---|---|---|---|
| 0.06% | 0.5% | 0.25% | 0.01% | 0.02% | 0.04% | 0.08% | 99.04% |

According to Table 3, the modified aluminum alloy conductor is obtained sequentially through a step of batching, a step of smelting and casting, a step of refining, a step of purifying, a step of casting blank, a step of rolling stem, a step of annealing finished product, the finished product slitting, the finished product detection, and the finished product packaging, where the mass ratio of Fe to Si is 8.3:1, and the mass ratio of Al to Cu is 396.16:1.

### Example 4

The difference of this example from Example 1 is as follows:

**Table 4**

| Si | Fe | Cu | Mg | Zn | B | Total content of unavoidable impurity | Al |
|---|---|---|---|---|---|---|---|
| 0.03% | 0.8% | 0.23% | 0.01% | 0.01% | 0.01% | 0.01% | 98.90% |

According to Table 4, the modified aluminum alloy conductor is obtained sequentially through a step of batching, a step of smelting and casting, a step of refining, a step of purifying, a step of casting blank, a step of rolling stem, a step of annealing finished product, the finished product slitting, the finished product detection, and the finished product packaging, where the mass ratio of Fe to Si is 26.67: 1, and the mass ratio of Al to Cu is 430: 1.

### Example 5

The difference of this example from Example 1 is as follows:

**Table 5**

| Si | Fe | Cu | Mg | Zn | B | Total content of unavoidable impurity | Al |
|---|---|---|---|---|---|---|---|
| 0.05% | 0.6% | 0.3% | 0.01% | 0.02% | 0.04% | 0.08% | 98.90% |

According to Table 5, the modified aluminum alloy conductor is obtained sequentially through a step of batching, a step of smelting and casting, a step of refining, a step of purifying, a step of casting blank, a step of rolling stem, a step of annealing finished product, the finished product slitting, the finished product detection, and the finished product packaging, where the mass ratio of Al to Cu is 329.7:1.

### Example 6

The difference of this example from Example 1 is as follows:

**Table 6**

| Si | Fe | Cu | Mg | Zn | B | Total content of unavoidable impurity | Al |
|---|---|---|---|---|---|---|---|
| 0.05% | 0.6% | 0.2% | 0.01% | 0.02% | 0.04% | 0.08% | 99.0% |

According to Table 6, the modified aluminum alloy conductor is obtained sequentially through a step of batching, a step of smelting and casting, a step of refining, a step of purifying, a step of casting blank, a step of rolling stem, a step of annealing finished product, the finished product slitting, the finished product detection, and the finished product packaging, where the mass ratio of Al to Cu is 495:1.

### Example 7

The difference of this example from Example 1 is as follows:

**Table 7**

| Si | Fe | Cu | Mg | Zn | B | Total content of unavoidable impurity | Al |
|---|---|---|---|---|---|---|---|
| 0.05% | 0.6% | 0.25% | 0.01% | 0.02% | 0.04% | ≤0.03% | 99.0% |

According to Table 7, the modified aluminum alloy conductor is obtained sequentially through a step of batching, a step of smelting and casting, a step of refining, a step of purifying, a step of casting blank, a step of rolling stem, a step of annealing finished product, the finished product slitting, the finished product detection, and the finished product packaging, where the mass ratio of Al to Cu is 396: 1.

### Example 8

The difference of this example from Example 1 is as follows:

**Table 8**

| Si | Fe | Cu | Mg | Zn | B | Total content of unavoidable impurity | Al |
|---|---|---|---|---|---|---|---|
| 0.05% | 0.687% | 0.283% | 0.01% | 0.01% | 0.02% | 0.04% | 98.9% |

According to Table 8, the modified aluminum alloy conductor is obtained sequentially through a step of batching, a step of smelting and casting, a step of refining, a step of purifying, a step of casting blank, a step of rolling stem, a step of annealing finished product, the finished product slitting, the finished product detection, and the finished product packaging, where the mass ratio of Al to Cu is 350: 1.

### Example 9

The difference of this example from Example 1 is as follows:

**Table 9**

| Si | Fe | Cu | Mg | Zn | B | Total content of unavoidable impurity | Al |
|---|---|---|---|---|---|---|---|
| 0.05% | 0.65% | 0.202% | 0.01% | 0.02% | 0.04% | 0.078% | 98.95% |

According to Table 9, the modified aluminum alloy conductor is obtained sequentially through a step of batching, a step of smelting and casting, a step of refining, a step of purifying, a step of casting blank, a step of rolling stem, a step of annealing finished product, the finished product slitting, the finished product detection, and the finished product packaging, where the mass ratio of Al to Cu is 490:1.

### Example 10

The difference of this example from Example 1 is that a 30/50 PPI dual-stage ceramic filter plate is used for primary filtration of the aluminum alloy liquid to obtain a filtrate; and the filtrate is subjected to further fine filtration through an electromagnetic purification device under a magnetic field strength of 0.7 T, obtaining the filtered aluminum alloy liquid.

### Example 11

The difference of this example from Example 1 is that the magnetic field strength of the first-level magnetic field is 0.3 T and the magnetic field strength of the second-level magnetic field is 0.6 T.

### Example 12

The difference of this example from Example 1 is that the magnetic field strength of the first-level magnetic field is 0.5 T and the magnetic field strength of the second-level magnetic field is 0.8 T.

### Example 13

The difference of this example from Example 1 is that the magnetic field strength of the first-level magnetic field is 0.2 T and the magnetic field strength of the second-level magnetic field is 0.4 T.

### Example 14

The difference of this example from Example 1 is that the temperature of the step of annealing finished product is 310°C.

### Example 15

The difference of this example from Example 1 is that the temperature of the step of annealing finished product is 340°C.

### Example 16

The difference of this example from Example 1 is that the temperature of the step of annealing finished product is 300°C.

### Comparative Example 1

The difference of this example from Example 1 is as follows:

**Table 10**

| Si | Fe | Cu | Mg | Zn | B | Total content of unavoidable impurity | Al |
|---|---|---|---|---|---|---|---|
| 0.02% | 0.04% | 0.48% | 0.02% | 0.02% | 0.04% | 0.08% | 99.30% |

According to Table 10, the modified aluminum alloy conductor is obtained sequentially though a step of batching, a step of smelting and casting, a step of refining, a step of purifying, a step of casting blank, a step of rolling stem, a step of annealing finished product, the finished product slitting, the finished product detection, and the finished product packaging.

### Comparative Example 2

The difference of this example from Example 1 is that a 30/50 PPI dual-stage ceramic filter plate is used for filtration of the aluminum alloy liquid to obtain the filtered aluminum alloy liquid.

The single-strand tensile strength, the single-strand elongation at break, the single-strand repeated bending number, creep resistance, and resistivity of the modified aluminum alloy conductor obtained from Examples 1 to 16, and Comparative Examples 1 and 2 are tested, and the test results are listed in Table 11.

The method for testing the creep resistance of the modified aluminum alloy conductor is as follows.
1. Test device: creep testing machine
2. Sample preparation: cutting a section of cable sample of 130 mm from the straightened cable core of a finished cable test segment, leaving 40 mm at each end, stripping off insulation from the middle section of 50 mm by ring-cutting, and exposing the cable conductor to obtain a cable conductor sample.
3. Test step
(1) Installation of sample: the cable conductor sample is clamped with a fixture in the creep testing machine. The shape of fixture has two arc concave-faces and a wideness of the fixture is 10 mm, in which the inner diameter of the arc is similar to the outer diameter of the conductor. The inner diameter of the fixture corresponding to the conductor cross-section is shown in Table 11. The radian of arc is 150°. During testing, the arc concave-faces contact the outer surface of the cable conductor sample, and the planes of the upper and lower fixtures contact the upper and lower pressing plates of the creep testing machine, respectively.

**Table 11**

| Nominal cross-sectional area of the conductor (mm²) | Inner diameter of the fixture (mm) |
|---|---|
| 70 | 10.0 |
| 150 | 15.0 |
| 240 | 18.5 |
| 400 | 24.0 |

(2) Setting of test conditions: the temperature within the test chamber is adjusted to 130°C and the test chamber is preheated for 30 minutes. The sample is pre-compressed, the pre-compressing depth being 10% of the outer diameter of conductor. The outer diameter of the conductor is measured by a paper tape method. The compressing depth of conductor is calculated as 10% of the outer diameter of the conductor. Before pre-compressing, the pressuring plate is first manually adjusted to approach the upper surface of fixture and such adjustment is over when the pressure value is displayed, in which the reading shall not exceed 20 N. Then, the compressing depth of conductor is set via an automatic control system. The compression is stopped once the conductor is pressed into the above required compress depth, and the pressure value displayed on the creep testing machine is recorded as an initial pressure value.
(3) Monitoring and Recording: under high temperature and pressure, creep generated by the conductor causes relaxation between the fixture and the conductor, as well as between individual strands of conductor, resulting in gradual pressure value decay. Over time, the press value will gradually tend to be stable value. From the start of the test until the pressure value is stable, a variation curve can be formed, where the pressure gradually decreases over time and then slowly tends to be stable. The variation curve of the pressure value as a function of time is monitored and recorded within the creep test of 100 h, as well as the pressure value at the end of the test, i.e., the stable pressure value.
(4) The ratio of the stable pressure value to the initial pressure value is calculated so as to evaluate the creep resistance of cable conductor. A higher ratio indicates superior creep resistance of the conductor surface.
4. Result Evaluation

Under the aforementioned test conditions, the indicator for evaluating the creep resistance of aluminum alloy cable conductor is a residual pressure value of conductor after 100 hours, i.e., the ratio of the stable pressure value to the initial pressure value (100h stable pressure value / initial pressure value × 100%), and the evaluation criterion requires this ratio to be no less than 60%. In other words, under specified test conditions, a sample is considered qualified for creep resistance if its residual pressure value is not less than 60%, and unqualified if the value is less than 60%.

The test method or standard for single-strand tensile strength is GB/T 4909.3.

The test method or standard for single-strand elongation at break is GB/T 4909.3.

The test method or standard for the number of single-strand repeated bending is GB/T 4909.5.

The test method or standard for resistivity is GB/T 3048.2.

**Table 12**

| Example / Comparative Example | Single-strand tensile strength /N/mm² | Single-strand elongation at break /% | Single-strand repeated bending number / times | Creep resistance of modified aluminum alloy conductor /% | Resistivity / Ω·m |
|---|---|---|---|---|---|
| Example 1 | 118 | 21 | 29 | 79 | 0.0275 |
| Example 2 | 128 | 20 | 28 | 81 | 0.0281 |
| Example 3 | 105 | 15 | 26 | 73 | 0.0216 |
| Example 4 | 150 | 16 | 25 | 72 | 0.0218 |
| Example 5 | 110 | 15 | 26 | 73 | 0.0211 |
| Example 6 | 105 | 17 | 25 | 72 | 0.0217 |
| Example 7 | 118 | 22 | 28 | 79 | 0.0276 |
| Example 8 | 125 | 21 | 29 | 78 | 0.0277 |
| Example 9 | 120 | 23 | 28 | 80 | 0.0275 |
| Example 10 | 105 | 18 | 25 | 70 | 0.0201 |
| Example 11 | 107 | 22 | 28 | 79 | 0.0276 |
| Example 12 | 109 | 24 | 29 | 76 | 0.0274 |
| Example 13 | 105 | 17 | 23 | 71 | 0.0201 |
| Example 14 | 113 | 20 | 28 | 76 | 0.0279 |
| Example 15 | 114 | 24 | 30 | 75 | 0.0275 |
| Example 16 | 105 | 16 | 24 | 71 | 0.0211 |
| Comparative Example 1 | 92 | 13 | 15 | 59 | 0.0203 |
| Comparative Example 2 | 101 | 11 | 14 | 58 | 0.0216 |

From the above description, it can be seen that the examples of the present invention achieve the following technical effects.

In the present application, through adjustment of the composition of the aluminum alloy and reasonable control of the content of copper, iron, and other components, the synergistic interaction between various components is maximized, which ensures that the aluminum alloy conductor has excellent creep resistance, mechanical properties, flexibility, and electrical performance, thereby enhancing the reliability of cable connections, preventing phenomena such as slippage at conductor connections, and guaranteeing the safe and reliable operation of the cable.

The foregoing description pertains only to preferred embodiments of the present invention and is not intended to limit the invention. For those skilled in the art, it is possible to make various modifications and variations to the invention. Any modifications, equivalent substitutions, improvements, etc., made within the spirit and principles of the present invention should be included within the scope of protection of the invention.

## Claims

1. A modified aluminum alloy conductor, wherein the modified aluminum alloy conductor comprises: 0.03-0.06 wt% of Si, 0.50-0.80 wt% of Fe, 0.20-0.30 wt% of Cu, 0.01 wt% or less of Mg, 0.02 wt% or less of Zn, 0.04 wt% or less of B, with a total content of unavoidable impurity being 0.08 wt% or less, and the remainder being Al, by mass percentage.

2. The modified aluminum alloy conductor according to claim 1, wherein a mass ratio of Fe to Si in the modified aluminum alloy conductor is 12-15:1.

3. The modified aluminum alloy conductor according to claim 1 or 2, wherein a mass ratio of Al to Cu in the modified aluminum alloy conductor is 350-490: 1.

4. The modified aluminum alloy conductor according to any one of claims 1 to 3, wherein the modified aluminum alloy conductor has a single-strand tensile strength ≥105 N/mm², a single-strand elongation at break ≥15%, and a single-strand repeated bending number ≥23 times.

5. The modified aluminum alloy conductor according to any one of claims 1 to 4, wherein a creep resistance of the modified aluminum alloy conductor is ≥70%.

6. A production process for a modified aluminum alloy conductor, sequentially comprising: a step of batching, a step of smelting and casting, a step of refining, a step of purifying, a step of casting blank, a step of rolling stem, and a step of annealing finished product, wherein the step of melting and casting comprises: sequentially performing a primary filtration and a fine filtration on an aluminum alloy liquid to obtain a filtered aluminum alloy liquid, wherein a process of the fine filtration is performed using electromagnetic purification.

7. The production process according to claim 6, wherein the process of the fine filtration comprises: passing a filtrate obtained from the primary filtration sequentially through a first-level magnetic field and a second-level magnetic field, wherein a magnetic field strength of the first-level magnetic field is less than that of the second-level magnetic field; preferably, the magnetic field strength of the first-level magnetic field is 0.3-0.5 T; preferably, the magnetic field strength of the second-level magnetic field is 0.6-0.8 T.

8. The production process according to claim 6 or 7, wherein the primary filtration is performed using a 30/50 PPI dual-stage ceramic filter plate; a removal rate of non-metallic impurity particle ≥1µm in the filtered aluminum alloy liquid is ≥90%; preferably, an impurity content of the non-metallic impurity particle in the filtered aluminum alloy liquid is 0.010-0.022 mm²/kg.

9. The production process according to any one of claims 6 to 8, wherein a temperature of the step of annealing finished product is controlled between 310°C and 340°C, and a duration of the step of annealing finished product is preferably controlled between 8 h to 12 h.

10. A modified aluminum alloy conductor cable comprising a conductor, wherein the conductor is the modified aluminum alloy conductor according to any one of claims 1 to 5.
